# EUROPÄISCHE PATENTSCHRIFT

(11) **EP 0 966 786 B1**
(45) Veröffentlichungstag und Bekanntmachung des Hinweises auf die Patenterteilung: **19.09.2001**
(21) Anmeldenummer: 98912311.2
(22) Anmeldetag: 14.02.1998
(51) Int. Cl.: H02K 7/02, H02K 7/09

(54) **SCHWUNGRAD-ENERGIESPEICHER**
FLYWHEEL ENERGY ACCUMULATOR
ACCUMULATEUR D'ENERGIE A ROUE VOLANTE

(30) Priorität: 11.03.1997 DE 19709674
(43) Veröffentlichungstag der Anmeldung: 29.12.1999
(73) Patentinhaber: Forschungszentrum Karlsruhe GmbH, 76133 Karlsruhe (DE)
(72) Erfinder: BORNEMANN, Hans, D-68753 Waghäusel (DE)
(86) Internationale Anmeldenummer: EP9800852
(87) Internationale Veröffentlichungsnummer: WO9840955

(56) Entgegenhaltungen:
- EP-A- 0 526 903
- DE-C- 19 608 099
- PATENT ABSTRACTS OF JAPAN vol. 097, no. 001, 31.Januar 1997 & JP 08 251869 A (CHUBU ELECTRIC POWER CO INC;MITSUBISHI HEAVY IND LTD), 27.September 1996,
- PATENT ABSTRACTS OF JAPAN vol. 097, no. 001, 31.Januar 1997 & JP 08 247183 A (CHUBU ELECTRIC POWER CO INC;MITSUBISHI HEAVY IND LTD), 24.September 1996,

## Beschreibung

Die vorliegende Erfindung betrifft einen Schwungrad-Energiespeicher mit senkrechter Welle und passiven, supraleitenden magnetischen Axiallagern an dieser, sowie einem Innenläufer Elektromotor/-generator, dessen Rotor mechanisch an mehrere Schwungräder angekoppelt und dessen Stator ortsfest zum Vakuumgehäuse des Energiespeichers ist und der die weiteren Merkmale im Oberbegriff des Patentanspruches 1 aufweist.

Supraleitende magnetische Lager sind für größere Schwungmassenspeicher zur verlustarmen Speicherung von elektrischer Energie besonders geeignet. Da die Lager ohne jegliche Regelung auskommen, sind sie selbststabilisierend. Bei Schwungradspeichern wird elektrische Energie in einer Motor-/Generator-Einheit in kinetische Energie umgewandelt und in einer hochfesten Schwungradscheibe gespeichert. Wichtig ist dabei die Minimierung der Verluste in der Speicherphase, um die Selbstentladung zu verhindern. Dazu ist der Rotor des Systemes berührungsfrei auf den erwähnten, supraleitenden Magneten gelagert,

Aus der DE-PS 196 08 099 ist ein Schwungrad-Energiespeicher mit senkrechter Welle und passiven, supraleitenden magnetischen Axiallagern bekannt. Die Leistungsfähigkeit dieses Speichers, der sich nicht ohne weiteres geometrisch vergrößern lässt, ist allerdings für Anwendungen in elektrischen Netzen oder in Verbindung mit Verkehrsmitteln nicht ausreichend.

Aufgabe der vorliegenden Erfindung ist es daher, einen solchen Schwungradenergiespeicher so weiter zu verbessern, daß Speicherkapazität und Leistung der Anlage in die Bereiche von 1 bis 5 MW und 50 bis 150 kwh gesteigert werden können.

Zur Lösung der Aufgabe schlägt die vorliegende Erfindung die Merkmale vor, die im kennzeichnenden teil des Patentanspruches 1 angegeben sind. Besonders vorteilhafte Ausgestaltungen der erfindung sind in den kennzeichnenden Merkmalen der Unteransprüche angegeben.

Durch den modularen Aufbau nach der Erfindung ergeben sich für den neuen Schwungrad-Energiespeicher besondere Vorteile. Durch die Kombination von verschiedenen Motor/Generatormodulen mit mehreren Schwungscheibenmodulen kann ein sehr breites Anwendungsspektrum abgedeckt werden. Wird z. B. hohe Leistung und geringe Speicherkapazität oder mittlere Leistung und hohe Speicherkapazität verlangt, so kann dies durch einfachen Austausch einzelner Module gegen andere oder durch einfaches Hinzufügen oder Wegnahme geschehen. Z. B. zur Bereitstellung von größeren Energiemengen werden ober- und unterhalb des Motor/Generator Moduls je nach Bedarf mehrere Schwungradmodule mit der entsprechenden Anzahl von Lager- und Kryostatmodulen auf der Rotorachse vorgesehen.

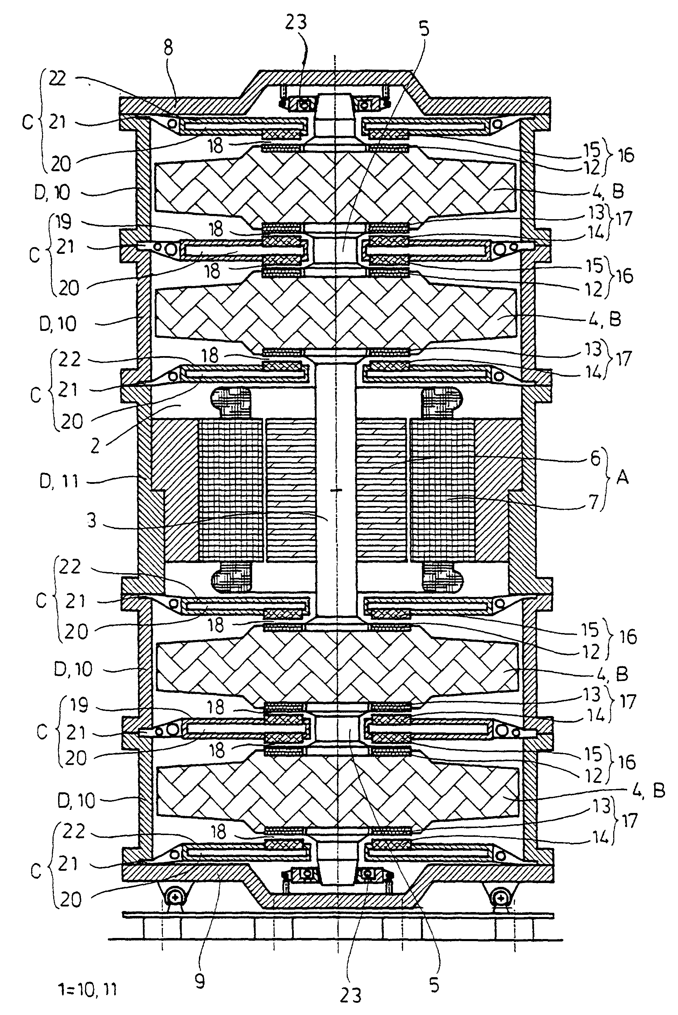

Einzelheiten des Schwungrad-Energiespeichers werden im folgenden und anhand der Figur näher erläutert:
Schwungrad-Energiespeicher der eingangs erwähnten Art bestehen im allgemeinen aus folgenden Komponenten: Einer Schwungradscheibe, supraleitenden, magnetischen Lagern (SML), einer Antriebseinheit - normalerweise einem Synchronmotor -, einem Vakuumgehäuse mit Vakuumsystem zur Aufnahme der Komponenten sowie den zugehörigen Pumpen und Sensoren.

Bei der in der Figur dargestellten Ausführung des Schwungrad-Energiespeichers ist die gesamte Vorrichtung in einem mit dem oberen 8 und dem unteren Deckel 9 geschlossenen Vakuumgehäuse 1 bzw. 10,11 in dem darin enthaltenen Vakuumraum 2 untergebracht. Ein wesentliches Element des Energiespeichers ist die senkrechte, drehbare Welle 3, auf welcher in Abstand zueinander mehrere Schwungräder 4, bei der dargestellten Ausführungsform vier, angebracht sind, wobei die Welle durch die Schwungräder 4 hindurchgeht und diese durch Distanzstücke 5 gegeneinander auf Abstand gehalten sind. Die Schwungräder 4 können in ihrer Form und ihren Abmessungen gleich sein, besonders zweckmäßig ist es, wenn sie gleiche Gewichte aufweisen und symmetrisch zueinander angeordnet sind. Zwischen den Schwungrädern 4 sitzt auf der Welle 3 der Rotor 6 der Elektromaschine, z. B. einer Innenläufer-Homopolarmaschine als Elektromotor und Generator, der aus den zwei um 90° gegeneinander versetzten Polelementen besteht. Um den Rotor 6, der auch fester Bestandteil der Welle 3 sein kann, ist der Stator 7 der Elektromaschinemaschine ortsfest im Gehäuse 1 angeordnet. Die Wicklungen 8 des Stators 7 erzeugen ein im Stator 7 rotierendes magnetisches Feld, welches die Welle 2, auf die Polelemente des Rotors 6 einwirkend, in Rotation versetzt. Auf diese Weise wird die eingebrachte elektrische Energie in Rotationsenergie der Schwungräder 1 umgewandelt.

Wesentliches Merkmal des neuen Schwungrad-Energiespeicher ist nun, daß sein Gesamtaufbau aus einzelnen, übereinander zusammengesetzten und miteinander verbundenenen Modulen besteht. Das zentrale Element davon ist der zentrische Motor/Generator Modul A. Er besteht aus dem mittleren Gehäusering 11, dem Stator 7 und dem Rotor 6 der Elektromaschine. Über und unter dem Gehäusering 11 sind jeweils mehrere, in ihrer Anzahl der Zahl der Schwungräder 4 entsprechend, gleich aufgebaute Gehäuseringe 10 als Gehäusemodule D vakuumdicht angeflanscht. Auf dem obersten der Ringe 10 sitzt der obere Deckel 8, unter dem untersten der untere Deckel 9. Alle zusammen bilden das Vakuumgehäuse 1, in welchem sich alle Bauteile des Schwungrad-Energiespeichers befinden.

Über und unter dem zentrischen Motor/Generator Modul sind die vier Schwungräder 4 als auswechelbare Schwungradmoduln B auf der zentralen Welle 3 vertikal übereinander angeordnet. Sie sind auf nicht näher dargestellte Weise auf der Welle 3 befestigt und mittels der Distanzstücke 5 auf ihr positioniert. Die Schwungräder 4 bzw.-module sind vorzugsweise alle gleich ausgebildet und bestehen in einem Auslegungsfall aus kohlefaserverstärkten Kunststoffen bei einem Energieinhalt von 12,5 kwh im Drehzahlbereich von über 10.000 Umin⁻¹ und einem Gewicht von 312 kg. An jedem Schwungrad 4 sind jeweils ein flacher oberer 12 und ein ebensolcher unterer, ringförmiger Permanentmagnet 13 aufgesetzt, durch welche die Welle 3 hindurchgeht. Diese Permanentmagnete 12 und 13 bilden für jedes Schwungrad 4 den mitdrehenden Magnetteil jeweils eines oberen und eines unteren SML 16 und 17 zusammen mit den ihnen hinter einem Zwischenspalt 18 gegenüberliegenden ringförmigen oberen 14 und untere Supraleitern 15.

Diese oberen und unteren Supraleiter 14 und 15 sind jeweils in die Ober- und Unterseite einer ringförmigen hohlen Scheibe 19 eingelassen, deren innerer Hohlraum 20 den gemeinsamen Kryostaten für jeweils ein Paar Supraleiter 14 und 15 bildet. Dabei liegen die Supraleiter 14 und 15 mit Ihren hinteren Flächen direkt in dem Hohlraum 20. Dies hat den Vorteil, daß die oberen und unteren Supraleiter 14 und 15 jeweils gemeinsam von einem Kryostaten 20 gekühlt werden können. Die hohle Scheibe 19 mit den Supraleitern 14 und 14 bildet zusammen den Lager- oder Kryostatenmodul C, das heisst die Scheiben 19 nehmen einerseits die jeweilige Last zur Übertragung auf das Gehäuse 1 auf und bilden andererseits gleichzeitig den Kryostaten für die SML. Dazu sind bei dem Ausführungsbeispiel gemäß der Figur die Ränder 21 zwischen den Gehäuseringen 10, dem mittleren Gehäusering 11 oder den Deckeln 8,9 formschlüssig eingespannt. Andersartig sind dabei die Scheiben 22 ausgebildet, die den Deckeln 8 und 9 sowie der Elektromaschine mit dem Rotor 6 zugerichtet sind. Diese Scheiben 22 weisen abweichend von den anderen Scheiben 19 jeweils nur einen unteren 14 oder einen oberen Supraleiter 15 auf, da sie die jeweiligen Endscheiben bilden und nur jeweils mit einer Seite als SML gegen den Magnet eines Schwungrades 4 diesen zugerichtet sind.

Die Lager- und Kryostatmodule C mit zwei Supraleitern 14 und 15 auf der Scheibe 19 sind zwischen den Schwungradmoduln B angeordnet, die Module C mit einem Supraleiter 14 oder 15 jeweils zwischen Motor/Generator Modul A und Schwungradmodul B oder am oberen und unteren Ende der Welle 3. Damit ist die Gesamtzahl der einzelnen SML 13, 14 und 12, 15 der SML-Lagermodule C doppelt so groß, wie die Anzahl der Schwungrad-Moduln B, da jedes Schwungrad 4 jeweils ein oberes und ein unteres SML 13, 14 und 12, 15 aufweist. Die Anzahl der Lagermodule C ist um zwei größer als die Anzahl der Schwungradmodule B. Somit sind oberhalb und unterhalb des Rotors 6 auf der Welle 3 jeweils mindestens zwei oder auch mehrere einzelne Schwungräder 4 vorhanden, zwischen denen die SML sitzen, die sich am Gehäuse 1 abstützen.

Wesentliche Elemente des Schwungrad-Energiespeichers sind die, vorzugsweise gleich aufgebauten supraleitenden Axiallager der Maschine. Alle Lager 9 bestehen aus je einem ringförmigen mit der Welle 3 und den Schwungrädern 4 mitdrehenden Permanentmagneten 12 und 13, je einem zum Gehäuse 1 festen Supraleiter 15 und 14 in einem Kryostaten 20. Die Supraleiter 14 und 15 sind ringförmig ausgebildet wie die Permanentmagnete 12 und 13 und sind seitlich so in den Kryostaten 20 eingebettet, daß eine ihrer Außenseiten gegenüber den Permanentmagneten 12 und 13 gelegen ist. Die ringförmigen Magnete 12 und 13 sind so angeordnet, daß zwischen ihrer Außenfläche und den Außenseiten der Supraleiter 14 und 15 ein enger Spalt 18 bleibt.

Die Kryostaten 20 werden auf nicht näher dargestellte Weise betrieben und sind durch den Vakuumraum 2 im Gehäuse 1 nach außen thermisch isoliert. Die Kühlung der SML 16 und 17 wird bei der dargestelleten Ausführung vorzugsweise mit flüssigem Stickstoff im Durchfluß bereitgestellt. Die Versorgung der Kühlaggregate kann dabei direkt aus der Energie des Schwungrades erfolgen.

Zusätzlich zu den SML 16 und 17 sind jeweils am oberen und unteren Ende der Welle 3 Axialrillenkugellager 23 als Notlager vorgesehen, welche bei einem Ausfall der SML 16 und 17 das Gewicht der Welle 2 mit den Schwungrädern und dem Rotor aufnehmen. Diese Lager 23 sind jedoch im Speicherbetrieb außer Funktion, d. h. ihre Lagerreibung beeinträchtigt das Speichervermögen nicht.

Die elektrische Maschine, der Motor/Generator 6, 7 ist in der Speicherphase, das heißt bei dann rotierenden Schwungrädern abgeregt, um Wirbelstromverluste zu vermeiden. Durch den Betrieb im Vakuum sind Luftreibungsverluste praktisch nicht vorhanden. Der Betrieb des Systemes bei sehr hohen Drehzahlen ist für eine hohe Effizienz der Anlage wichtig, da es ein günstiges Leistungs- und Energiegewicht bei gleichzeitiger optimaler Ausnutzung des Schwungscheibenmateriales ermöglicht.

Bei dem in der Figur dargestellten Ausführungsbeispiel verteilt sich eine gespeicherte Energie von 50 kwh auf insgesamt vier Schwungräder 4 in den Schwungradmoduln B. Für die supraleitende Lagerung sind dazwischen insgesamt sechs Lagermodule C vorgesehen. Die Leistung der Motor/Generatoreinheit beträgt 500 kw.

### Bezugszeichenliste:

- SML: supraleitendes Magnetlager

- A: Motor/Generator Modul (6,7)
- B: Schwungradmodul (4)
- C: Lager- und Kryostatmodul (20,21,22 und 19,20,21)
- D: Gehäusemodul (10,11)

- 1: Vakuumgehäuse
- 2: Vakuumraum
- 3: Welle
- 4: Schwungräder
- 5: Distanzstücke
- 6: Rotor
- 7: Stator
- 8: oberer Deckel
- 9: unterer Deckel
- 10: Gehäuseringe
- 11: mittlerer Gehäusering
- 12: obere Permanentmagnete
- 13: untere Permanentmagnete
- 14: obere Supraleiter
- 15: untere Supraleiter
- 16: oberes SML
- 17: unteres SML
- 18: Spalt
- 19: Scheibe
- 20: Hohlraum, Kryostat
- 21: Ränder
- 22: Scheibe
- 23: Notlager

## Patentansprüche

1. Schwungrad-Energiespeicher mit senkrechter Welle (3) und passiven, supraleitenden magnetischen Axiallagern (SML) (16, 17) an dieser, sowie einem Innenläufer Elektromotor/-generator (A), dessen Rotor (6) mechanisch an mehrere Schwungräder (4) angekoppelt und dessen Stator (7) ortsfest zum Vakuumgehäuse (1) des Energiespeichers ist, wobei
a) die Schwungräder (4) in Abstand zueinander gemeinsam auf der Welle (3) des Rotors (6) der Homopolarmaschine sitzen, und dieser auf der Welle (3) in symetrischer Anordnung zwischen den Schwungrädern (4) innerhalb des Stators (7) angeordnet ist und
b) auf der Welle (3) unter dem untersten Schwungrad der Ringmagnet eines ersten, unteren supraleitenden passiven Axiallagers als Drucklager, über dem obersten der Ringmagnet eines zweiten, oberen supraleitenden passiven Axiallagers als Zuglager gegen die Schwerkraft sitzt und
c) den Ringmagneten auf der den Schwungrädern (4) abgewandten Seite jeweils ein scheibenförmiger Supraleiter mit Abstand gegenüber liegt, der gegenüber dem Gehäuse fest ist, und
d) um den Rotor (6) als Teil der Welle (3) der Stator (7) der Elektromaschine angeordnet ist, wobei die Wicklungen des Stators (7) in diesem ein rotierendes magnetisches Feld erzeugen, welches auf den Rotor (6) einwirkt,
**gekennzeichnet durch** die folgenden Merkmale:
e) die Gesamtanordnung des Schwungrad-Energiespeicher besteht aus einzelnen, übereinander zusammengesetzten und miteinander verbundenenen Modulen, einem mittleren Motor/Generator Modul (A) mit einem Gehäusering, dem Stator (7) und dem Rotor (6) der Elektromaschine sowie mehreren, über und unter dem mittlerern Modul angeordneten Schwungrad-Modulen (B) sowie zwischen diesen selbst und dem Motor/Generator Modul (A) angeordneten SML-Lagermodulen (C), wobei
f) die Gesamtzahl der einzelnen SML der SML-Lagermodule (C) doppelt so groß ist, wie die Anzahl der Schwungrad-Modulen (B) und jedes Schwungrad jeweils ein oberes und ein unteres SML (16,17) aufweist und
g) die einzelnen SML-Lagermodule (C) jeweils eines oder zwei SML (14,15) aufweisen
h) die Anzahl der SML-Lagermodule (C) ist um zwei größer als die Anzahl der Schwungradmodule (B).

2. Schwungrad-Energiespeicher nach Anspruch 1, **gekennzeichnet durch** die weiteren Merkmale:
i) oberhalb und unterhalb des Rotors (6) sind auf der Welle (3) jeweils mindestens zwei oder mehrere Schwungradmodule (B) oder Schwungräder (4) vorhanden, zwischen denen sich am Gehäuse (1) abstützende SML-Lagermodule (C) angeordnet sind, auf denen zwei SML (14, 15), je eines oben und unten, sitzen,
j) zwischen den, dem Rotor benachbarten Schwungradmoduln (B) oder Schwungrädern (4) und diesem ist jeweils ein weiteres SML-Lagermodul (C) mit einem SML (16 oder 17) vorgesehen, der sich ebenfalls am Gehäuse (1) abstützt.

3. Schwungrad-Energiespeicher nach Anspruch 1 oder 2, **gekennzeichnet durch** die weiteren Merkmale:
k) die SML-Lagermodule (C) gemäß i) bestehen aus einer ringförmigen hohlen Scheibe (19) in deren Ober- und Unterseite jeweils ein oberer und ein unterer Supraleiter (14,15) eingelassen sind und deren innerer Hohlraum (20) den gemeinsamen Kryostaten für jeweils ein Paar der Supraleiter (14 und 15) bildet, wobei diese mit ihren hinteren Flächen direkt in dem Hohlraum (20) liegen.

4. Schwungrad-Energiespeicher nach einem der vorstehenden Ansprüche, **gekennzeichnet durch** die weiteren Merkmale:
1) die SML-Lagermodule (C) gemäß k) bestehen aus einer ringförmigen hohlen Scheibe (19) in deren eine Seite entweder ein oberer oder ein unterer Supraleiter eingelassen ist und deren innerer Hohlraum (20) den Kryostaten für den Supraleiter (14 oder 15) bildet, wobei dieser mit seiner hintere Fläche direkt in dem Hohlraum (20) liegt.

5. Schwungrad-Energiespeicher nach einem der vorstehenden Ansprüche, **gekennzeichnet durch** die weiteren Merkmale:
m) die Gehäusemodule (D) bestehen aus mehreren, in ihrer Anzahl der Zahl der Schwungräder (4) entsprechenden, gleich aufgebauten Gehäuseringen (10), die über und unter dem mittleren Gehäusering (11) vakuumdicht angeflanscht sind und zwischen denen die Ränder (21) der Scheiben (19, 22) formschlüssig eingespannt sind.

6. Schwungrad-Energiespeicher nach einem der vorstehenden Ansprüche, **gekennzeichnet durch** die weiteren Merkmale:
n) die Schwungradmodule (B) bestehen aus den Schwungrädern (4), die über und unter dem zentrischen Motor/Generator Modul (A) auf der zentralen Welle (3) vertikal auswechselbar übereinander angeordnet, auf ihr befestigt und mittels der Distanzstücke (5) positioniert sind.

## Claims

1. Flywheel energy accumulator, having a vertical shaft (3) and passive, superconducting magnetic axial bearings (SMBs) (16, 17) on said shaft, as well as an internal armature-type electric motor/generator (A), the rotor (6) of which is mechanically coupled to a plurality of flywheels (4), and the stator (7) of which is stationary relative to the vacuum housing (1) of the energy accumulator, wherein
a) the flywheels (4) sit jointly on the shaft (3) of the rotor (6) of the homopolar machine with spacings therebetween, and said rotor is disposed on the shaft (3) in a symmetrical arrangement between the flywheels (4) internally of the stator (7), and
b) the annular magnet of a first, lower superconducting, passive axial bearing sits on the shaft (3) below the lowermost flywheel as a thrust bearing, and the annular magnet of a second, upper, superconducting, passive axial bearing sits above the uppermost flywheel as a tractive bearing in opposition to the force of gravity, and
c) a disc-shaped superconductor lies opposite each annular magnet, with a spacing therebetween, on the side remote from the flywheels (4), which superconductor is fixed relative to the housing, and
d) the stator (7) of the electric motor is disposed around the rotor (6) as part of the shaft (3), the windings of the stator (7) generating in said stator a rotating magnetic field which acts on the rotor (6),
**characterised by** the following features:
e) the total arrangement of the flywheel energy accumulator comprises individual and interconnected modules, which are fitted together one above the other, a central motor/generator module (A) with a housing ring, the stator (7) and the rotor (6) of the electric motor, as well as a plurality of flywheel modules (B), which are disposed above and below the more central module, as well as SMB bearing modules (C), which are disposed between said flywheel modules themselves and the motor/generator module (A), wherein
f) the total number of individual SMBs of the SMB bearing modules (C) is twice as high as the number of flywheel modules (B), and each flywheel has respectively an upper and a lower SMB (16, 17), and
g) the individual SMB bearing modules (C) each have one or two SMBs (14, 15), and
h) the number of SMB bearing modules (C) is double the number of flywheel modules (B).

2. Flywheel energy accumulator according to claim 1, **characterised by** the additional features:
i) there are at least two or more flywheel modules (B) or flywheels (4) on the shaft (3) above and below the rotor (6) respectively, SMB bearing modules (C) being supported on the housing (1) and being disposed between said flywheel modules or flywheels, two SMBs (14, 15) sitting on said SMB modules, one at the top and one at the bottom, and
i) an additional SMB bearing module (C), having an SMB (16 or 17) which is also supported on the housing (1), is respectively provided between the flywheel modules (B) or flywheels (4), adjacent the rotor, and said rotor.

3. Flywheel energy accumulator according to claim 1 or 2, **characterised by** the additional features:
k) the SMB bearing modules (C) according to i) comprise an annular hollow disc (19), an upper superconductor and a lower superconductor (14, 15) being respectively inserted into the upper side and underside of said disc, and the inner cavity (20) of said disc forming the common cryostat for each respective pair of superconductors (14 and 15), the latter lying with their rear faces directly in the cavity (20).

4. Flywheel energy accumulator according to one of the preceding claims, **characterised by** the additional features:
l) the SMB bearing modules (C) according to k) comprise an annular hollow disc (19), either an upper superconductor or a lower superconductor being inserted into one side of said disc, and the inner cavity (20) of said disc forming the cryostat for the superconductor (14 or 15), the latter lying with its rear face directly in the cavity (20).

5. Flywheel energy accumulator according to one of the preceding claims, **characterised by** the additional features:
m) the housing modules (D) comprise a plurality of identically constructed housing rings (10), which correspond in number to the number of flywheels (4), said rings being flange-mounted in a vacuum-tight manner above and below the central housing ring (11), and the edges (21) of the discs (19, 22) being clamped in position between said rings in a form-locking manner.

6. Flywheel energy accumulator according to one of the preceding claims, **characterised by** the additional features:
n) the flywheel modules (B) comprise the flywheels (4), which are disposed above and below the central motor/generator module (A) on the central shaft (3) so as to be vertically interchangeable one above the other, said modules being secured on said shaft and being positioned by means of the spacer members (5).

## Revendications

1. Accumulateur d'énergie à volants d'inertie comportant un arbre vertical (3) et sur cet arbre des paliers axiaux magnétiques supraconducteurs passifs (SML 16, 17), ainsi qu'un rotor intérieur d'un moteur/générateur électrique (A) dont le rotor (6) proprement dit est couplé mécaniquement à plusieurs volants d'inertie (4) et dont le stator (7) est monté de manière fixe par rapport au boîtier sous vide (1) de l'accumulateur d'énergie, dans lequel :
a) les volants d'inertie (4) sont montés à intervalles les uns par rapport aux autres en commun sur l'arbre (3) du rotor (6) de la machine homopolaire, le rotor étant installé sur l'arbre (3) suivant une disposition symétrique entre les volants d'inertie (4) à l'intérieur du stator (7),
b) sur l'arbre (3), sous le volant d'inertie inférieur, se trouve l'aimant annulaire d'un premier palier axial passif supraconducteur inférieur comme palier de poussée, et au-dessus du volant supérieur se trouve l'aimant annulaire supérieur d'un second palier axial passif supraconducteur supérieur comme palier de traction pour recevoir le poids, et
c) les aimants annulaires sur le côté opposé à celui des volants d'inertie (4) sont chaque fois avec un entrefer en face d'un supraconducteur en forme de disque, fixe par rapport au boîtier, et
d) autour du rotor (6) comme partie de l'arbre (3), se trouve installé le stator (7) de la machine électrique, les enroulements du stator (7) générant dans celui-ci un champ magnétique tournant agissant sur le rotor (6),
**caractérisé en ce que**
e) la disposition d'ensemble de l'accumulateur d'énergie à volants d'inertie se compose de différents modules distincts, superposés et reliés l'un à l'autre, d'un module intermédiaire moteur/générateur (A) ayant un anneau de boîtier recevant le stator (7) et le rotor (6) de la machine électrique, ainsi que de plusieurs modules à volant d'inertie (B) prévus au-dessus et en dessous du module intermédiaire, ainsi qu'entre celui-ci et le module moteur/générateur (A), des modules de paliers (SML C),
f) le nombre total de différents modules de paliers SML (C) est double du nombre de modules à volant d'inertie (B) et chaque volant d'inertie comporte chaque fois un élément SML (16, 17) supérieur et inférieur,
g) les différents modules de paliers SML (C) ont chaque fois un ou deux éléments SML (14, 15), et
h) le nombre de modules de paliers SML (C) est supérieur de deux au nombre de modules à volant d'inertie (B).

2. Accumulateur d'énergie à volants d'inertie selon la revendication 1, **caractérisé par** les caractéristiques suivantes :
i) au-dessus et en dessous du rotor (6), l'arbre (3) comporte chaque fois au moins deux ou plusieurs modules à volant d'inertie (B) ou volants d'inertie (4) entre lesquels le boîtier (1) comporte des modules de paliers SML (C) qui s'appuient contre le boîtier et parmi lesquels deux modules SML (14, 15) sont situés l'un au-dessus, l'autre en dessous,
j) entre les modules à volant d'inertie (B) voisins du rotor ou volants d'inertie (4), et le rotor on a chaque fois un autre module de palier SML (C) avec un élément SML (16, 17) s'appuyant de manière analogue contre le boîtier (1).

3. Accumulateur d'énergie à volants d'inertie selon la revendication 1 ou 2,
**caractérisé en ce que**
k) les modules de paliers SML (C) selon la caractéristique (i) sont formés d'un disque creux annulaire (19) dont la face supérieure et la face inférieure intègrent chaque fois un supraconducteur supérieur et inférieur (14, 15) et dont la cavité intérieure (20) forme le cryostat commun pour chaque paire de supraconducteurs (14, 15), ceux-ci étant situés directement dans la cavité (20) par leur surface arrière.

4. Accumulateur d'énergie à volants d'inertie selon l'une des revendications précédentes,
**caractérisé en ce que**
l) les modules de palier SML (C) selon la caractéristique (k) sont formés d'un disque creux annulaire (19) dans lequel est intégré un côté d'un supraconducteur supérieur et inférieur et dont la cavité interne (20) forme le cryostat pour le supraconducteur (14 ou 15), celui-ci ayant sa surface arrière directement dans la cavité (20).

5. Accumulateur d'énergie à volants d'inertie selon l'une des revendications précédentes,
**caractérisé en ce que**
m) les modules de boîtier (D) sont formés de plusieurs anneaux de boîtier (10) dont le nombre correspond au nombre de volants d'inertie (4) et sont de même construction, ces anneaux de boîtier étant bridés de manière étanche au vide par l'anneau de boîtier supérieur et inférieur (11), et entre ceux-ci sont serrés les bords (21) des disques (19, 22) par une liaison par la forme.

6. Accumulateur d'énergie à volants d'inertie selon l'une des revendications précédentes,
**caractérisé en ce que**
n) les modules de volant d'inertie (B) formés des volants d'inertie (4) sont superposés en alternant verticalement sur l'arbre central (3) qui se trouve au-dessus et en dessous du module central (A) moteur/générateur, et ils sont fixés à l'arbre central qui les reçoit en alternance et en étant positionnés par des pièces d'écartement.
